# EUROPEAN PATENT APPLICATION

(11) **EP 0 897 881 A1**
(43) Date of publication of application: **24.02.1999**
(21) Application number: 98306732.3
(22) Date of filing: 21.08.1998
(51) Int. Cl.: B65G 7/12

(54) **Lifting apparatus**

(30) Priority: 22.08.1997 GB 9717744
(71) Applicant: Jones, David John, Aberbargoed, Mid Glamorgan CF81 9DT (GB)
(72) Inventor: Jones, David John, Aberbargoed, Mid Glamorgan CF81 9DT (GB)
(74) Representative: Davies, Gregory Mark

(57) **Abstract**

A lever arm (5) is pivotable relative to a support mounting (2) to engage and displace a contact which causes clamping limbs (12a,12b) pivotally mounted to the support mounting (2) to be pivotally displaced between a release configuration (in which an object is not clamped for lifting) and a release configuration (in which the object is clamped for lifting). The lever arm (5) by which the apparatus and object are lifted provides high mechanical advantage for the clamping force.

## Description

The present invention relates to lifting apparatus, and in particular lifting apparatus for use in handling heavy objects such as blocks, kerbstones, sleepers, pipes and the like.

Frequently, in construction it is required to lift, and handle heavy items such as building materials (blocks, beams, kerbstones and the like) to be situated in accurate spatial relationship to other building materials. For example, heavy kerbstones need to be laid end to end, flooring beams need to be laid side by side. Various proposals have been made to make manual lifting of such items more convenient or to provide mechanically operable handling apparatus. Examples of such proposals are disclosed in US-A-4109952, GB-A-645790, and GB-A-998416.

Improved apparatus has now been devised.

According to the invention, there is provided lifting apparatus including:
i) support mounting means;
ii) a lever arm arranged to be operated for lifting, the lever arm being pivotable relative to the support mounting means;
iii) spaced clamping elements pivotally mounted to the support mounting means at spaced locations to be pivotally moveable between a release configuration and a clamping configuration; and, iv) contact means linked to respective clamping elements and arranged to contact the lever arm to be displaced upon pivoting of the lever arm during lifting of the lever arm so as to pivot the clamping elements between the release and clamping configurations.

The apparatus is particularly useful for use as a manual lifting tool, in which case the lifting lever is dimensioned to be gripped by the user. Alternatively, the apparatus may form part of a powered mechanical lifting apparatus.

The lever arm preferably comprises a proximal end pivotally mounted relative to the support mounting an a distal free end.

For manual use in particular, the lever arm is desirably pivotally mountable relative to the support mounting means in alternative configurations (preferably by means of a first pivot location proximate an end of the arm and a second pivot location more intermediate the proximal and distal ends of the arm).

The contact means is beneficially arranged to engage the pivoting lever arm in the region of pivotal mounting of the lever arm. The point of contact between the contact means and the lever arm preferably changes as the lever arm pivots (preferably by sliding or rolling of the contact means relative to the lever arm).

The contact means beneficially comprises a bridge portion of a linkage, which linkage connects the spaced clamping elements and preferably extends above the lever arm.

The contact means preferably spans transversely the lever arm.

A linkage preferably connects the spaced clamping elements, the linkage desirably including pivotally connected linkage elements each pivotal about a common pivot axis which is caused to be displaced relative to the support mounting means as the lever arm is lifted.

Lifting apparatus according to any preceding claim, wherein the spaced clamping elements:
i) comprise respective elongate limbs extending away from the support mounting means; and/or,
ii) are pivotally mounted to the support mounting means at respective fixed pivot connections; and/or,
iii) are constrained to move together in unison toward one another (to the clamping position) or away from one another (to the release position); and/or,
iv) are arranged to pivot in a swing plane which is transverse to the longitudinal axis of the lever arm; and/or,
v) are provided with respective grip enhancing means (such as grip pads or the like); and/or,
vi) are de-mountable from the support mounting means, to be replaced with alternative clamping elements.

In one embodiment a pair of lifting arrangements are provided in combination, each connected at a spaced portion of a rigid elongate inter-connector (which is preferably selectively adjustable in length), such that the respective lever arms extend away from one another.

The invention will now be further described in specific embodiments, by way of example only, and with reference to the accompanying drawings in which:
Figure 1 is a perspective view of exemplary apparatus according to the invention;
Figure 2 is an exploded perspective view of the apparatus of Figure 1;
Figure 3 is a perspective view of assembly of an alternative embodiment of the apparatus according to the invention;
Figure 4 is a perspective view of the apparatus of Figure 3 in use;
Figure 5 is a perspective view of the apparatus of Figures 3 and 4 arranged in an alternative configuration;
Figure 6 is a perspective view of a further alternative embodiment of the apparatus according to the invention; and,
Figures 7 to 11 are perspective views of exemplary apparatus according to the invention for use in differing handling applications.

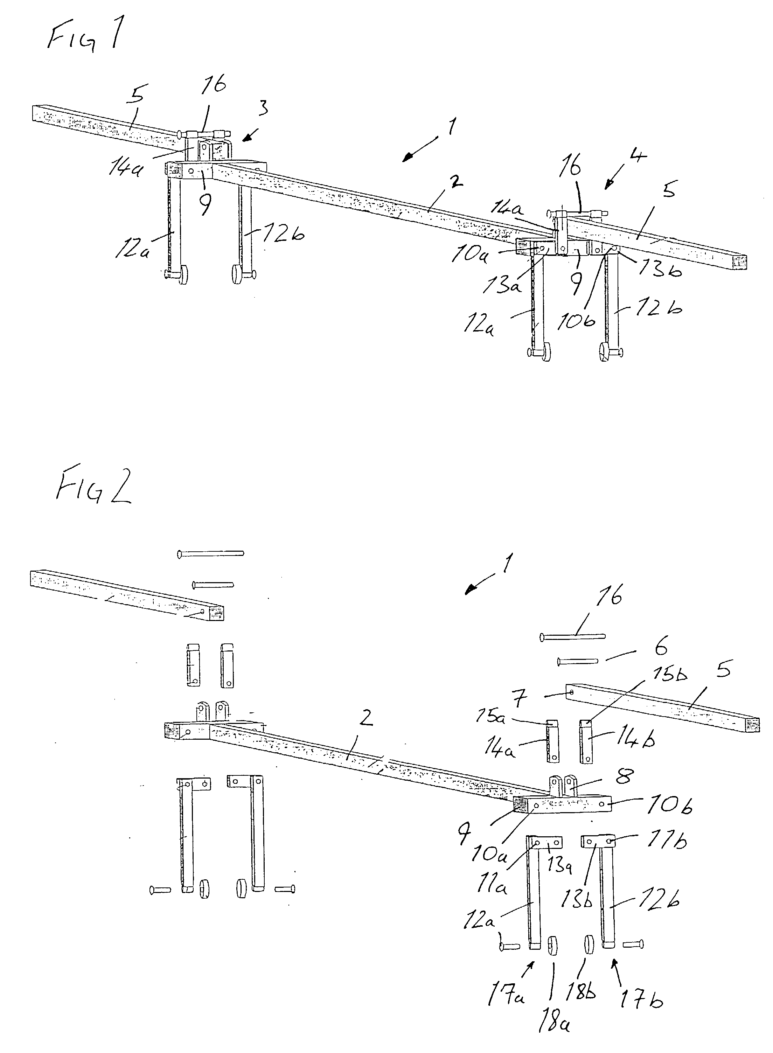

Referring to the drawings, and initially to Figures 1 and 2, there is shown lifting apparatus generally designated 1 comprising an elongate metal beam 2 connecting substantially identical lifting mechanisms 3,4 arranged facing one another at opposed ends of beam 2.

Each lifting mechanism 3,4 comprises an elongate lever arm 5 which is pivotally connected by a pivot pin 6 extending through a bore 7 and mounted through the spaced upstanding sides of a bracket 8. Bracket 8 is carried by a transversely extending support mounting 9. Support mounting 9 carries pivot post receiving bores 10 which are arranged to receive pivot posts (not shown) passing through apertures 11 in a right angle fixed connection made between respective downwardly depending clamping arms 12a,12b and linkage elements 13a,13b (respective clamping arms 12a,12b and linkage elements 13a,13b are fixed relative to one another in mutually perpendicularly extending directions). Respective linkage arms 13a,13b are provided with a respective further aperture for receiving a further pivot pin (not shown) which provides a pivotal linkage connection with upwardly extending linkage elements 14a, 14b, such that the position of the pivotal connection between elements 13a,14a and 13b,14b is moveable relative to the support mounting 9. Linkage elements 14a,14b extend upwardly one on either side of lever arm 5 and are provided at their uppermost extents with a respective sleeve 15a,15b each arranged to receive a respective spaced portion of a contact pin 16 provided as a bridge extending above a portion of the respective lever arm 5.

Operation of the lifting mechanisms 3,4 is such that in lifting lever arm 5 from the position shown in Figure 1 (in which downwardly depending clamping limbs 12a,12b are in the release position) the upper surface portion of lever arm 5 close to its proximal end (near the pivot 6) engages with the underside of bridging contact pin 16 which is thereby lifted upwardly. As bridging contact pin 16 is forced upwardly by lever arm 5, it slides or rolls along the upper surface of lever arm 5. Upward displacement of contact pin 6 causes linkage elements 14a,14b to be raised upwardly, and correspondingly the pivot connection with transverse linkage element 13a,13b also to be raised upwardly. This in turn effects pivoting of the fixed perpendicular arrangement of respective linkage elements 13a,13b with respective clamping limbs 12a,12b to cause the distal ends 17a,17b thereof to be adducted toward one another to a clamping position in which clamping pads 18a and 18b engage with and clamp the object to be lifted.

Manual lifting of respective lever arms 5 at respective ends of connecting beam 2 (typically by separate persons) causes the object to be lifted to be gripped at spaced portions enabling lifting and placing of the object in the required position. The use of relatively long lever arms 5 improves the mechanical advantage and increases the clamping force available. The weight of the object to be lifted ensures that for heavier objects, a greater clamping force is provided.

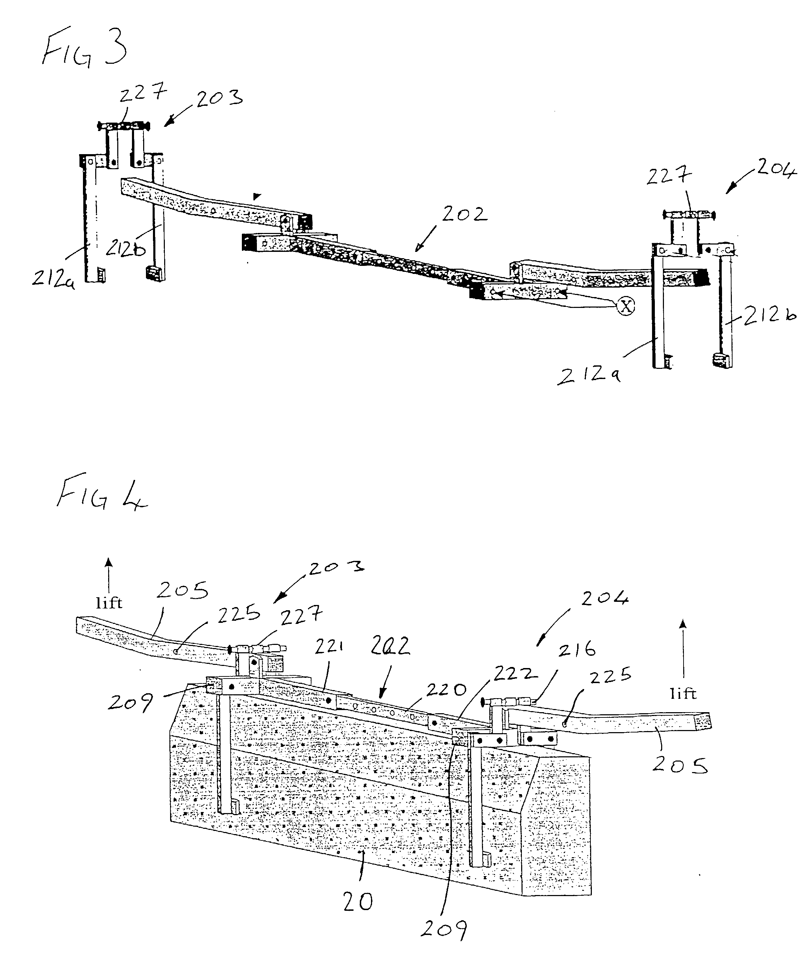

Figure 4 shows apparatus in use clamping a kerbstone block 20.

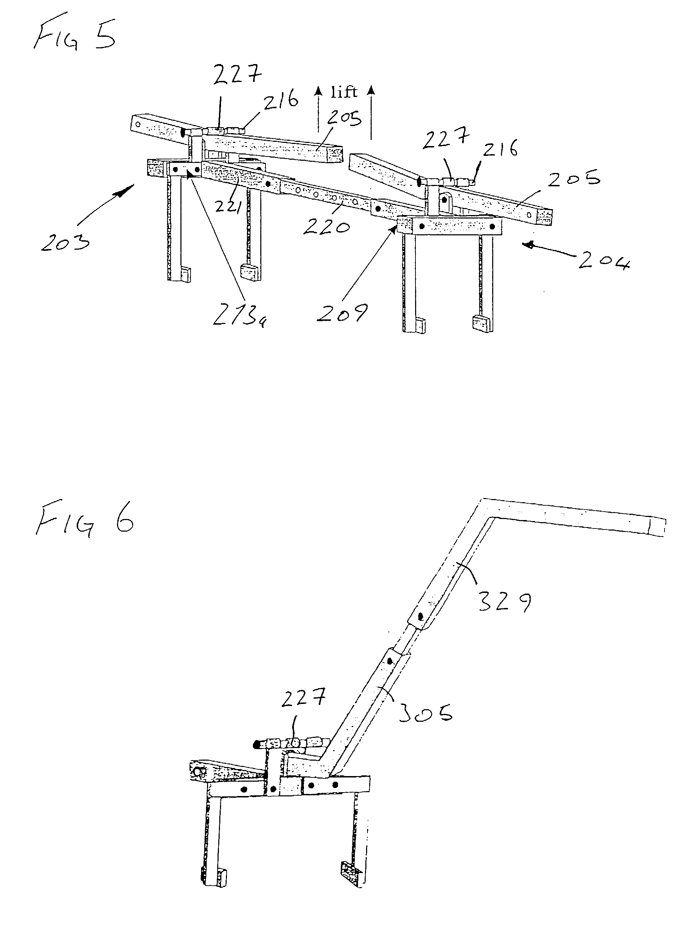

In the embodiment shown in Figures 3 and 4, the connecting beam 202 comprises a composite beam including a central beam portion 220 telescopically received in hollow section receiving arm 221, 222 projecting from the respective support mountings 209. The effective length of the connecting beam 202 can be varied by altering the telescopic orientations of hollow arms 221, 220 along the length of connecting beam portion 220. Central connection beam portion 220 is provided with a series of spaced holes, which aline with respective holes positioned at distal ends of hollow arms 221, 222 through which respective engagement pins can be received to fix the beam 202 to the required length for the job at hand. A further modification from the embodiments shown in Figures 1 and 2 is that the lever arms 205 are provided with a distal lever portion inclined at an angle to a proximal lever portion. This provides a more convenient gripping facility for the user, and also enables the lever arms 205 to be reorientated for a different type of lift shown in Figure 5. In the embodiment shown in Figure 5, the handles are pivoted through alternative pivot pin receiving apertures 225, such that the (distal) ends of the lever arms 205 are positioned close to one another over the central connecting beam portion 220. This enables a single operator to use the double clamping lifting arrangement with one hand gripping each lever arm over the central connector portion 220. In the configuration shown in Figure 5, the linkage 14a,14b, 13a,13b and arm 12a,12b connection has been reversed to be mounted on the opposite side of the respective support mounting 209 to ensure that, in lifting the lever arms 205, the required degree of lift is imparted to the contact pin 216. As shown in the embodiment of Figures 3 to 6, the contact pin is provided with a rolling bush 227 to contact the upper surface of the respective lever arm 205, thereby to minimise wear of the contact pin 216 during use.

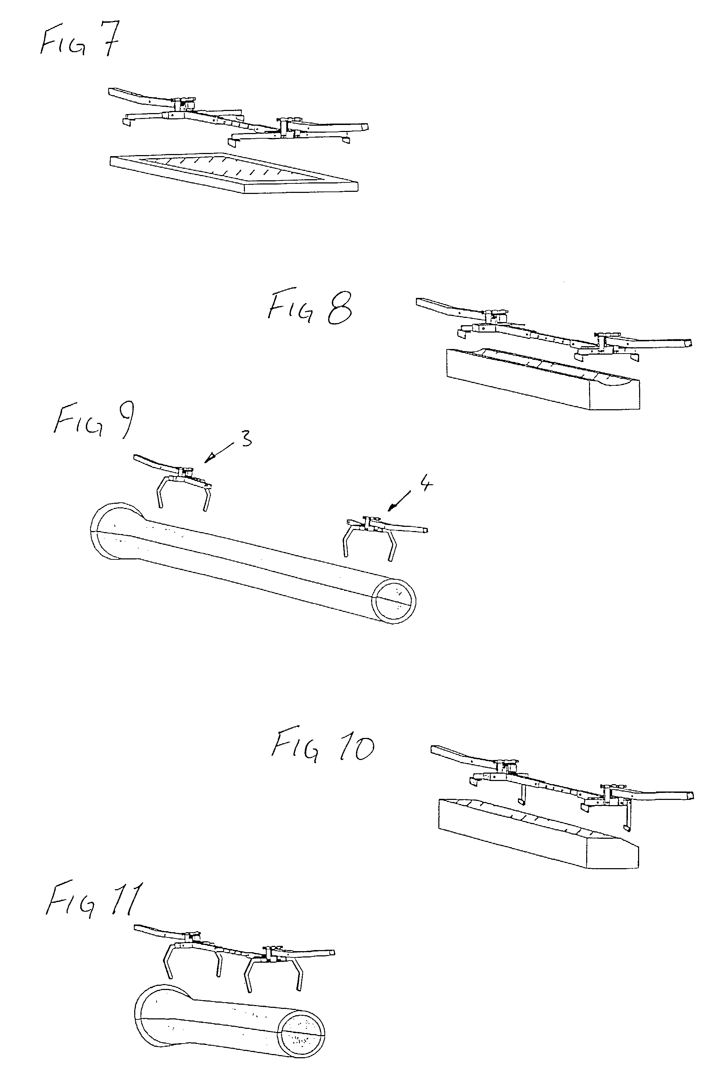

In view of the fact that, for the embodiments shown in Figures 3 to 5, each mechanism 203,204 is separable from the central beam portion 220, each mechanism can be used independently by a single user to provide a single clamping grip to lift objects. Furthermore, as shown in Figure 9, for extremely long objects (such as pipes etc) separate users may use separate clamping mechanism 3,4 spaced by a distance of indeterminate length along the object to the lifted.

As shown in Figure 6, a modified lever 305 may be provided with an extension and handle piece 329 to make clamping and lifting more convenient for the user.

Because the respective clamping arrangements 3,4 203,204 are de-mountable from the relevant support mountings 9,209 (as shown in Figure 3) replacement clamping arrangements having differing configurations of clamping limbs 12a,12b, 212a,212b may be provided for differing applications. Differing configurations of clamping arrangements for mounting to the relevant support mountings 9,209 are shown in Figures 7 to 11 for lifting and handling various objects.

The invention provides lifting apparatus using a lever and sliding fulcrum arrangement which provides clamping for effective handling of large objects and which is versatile in its use and application.

The invention has primarily been described in relation to use as a manual lifting aid, and it is believed that particular benefit is derived in this respect. It is however envisaged that the apparatus will perform effectively as a lifting mechanism employed in a power operated mechanical lifting system, in which the lever arm 5,205 would be driven by motive means.

## Claims

1. Lifting apparatus including:
i) support mounting means;
ii) a lever arm arranged to be operated for lifting, the lever arm being pivotable relative to the support mounting means;
iii) spaced clamping elements pivotally mounted to the support mounting means at spaced locations to be pivotally moveable between a release configuration and a clamping configuration; and,
iv) contact means linked to respective clamping elements and arranged to contact the lever arm to be displaced upon pivoting of the lever arm during lifting of the lever arm so as to pivot the clamping elements between the release and clamping configurations.

2. Lifting apparatus according to claim 1, wherein the lever arm comprises a proximal end pivotally mounted relative to the support mounting an a distal free end.

3. Lifting apparatus according to claim 1 or claim 2, wherein the lever arm is pivotally mountable relative to the support mounting means in alternative configurations (preferably by means of a first pivot location proximate an end of the arm and a second pivot location more intermediate the proximal and distal ends of the arm).

4. Lifting apparatus according to any preceding claim, wherein the contact means is arranged to engage the pivoting lever arm in the region of pivotal mounting of the lever arm.

5. Lifting apparatus according to any preceding claim wherein the point of contact between the contact means and the lever arm changes as the lever arm pivots (preferably by sliding or rolling).

6. Lifting apparatus according to any preceding claim, wherein the contact means comprises a bridge portion of a linkage, which linkage connects the spaced clamping elements and preferably extends above the lever arm.

7. Lifting apparatus according to any preceding claim, wherein the contact means extends transversely relative to the lever arm.

8. Lifting apparatus according to any preceding claim, wherein a linkage connects the spaced clamping elements, the linkage including pivotally connected linkage elements each pivotal about a common pivot axis which is caused to be displaced relative to the support mounting means as the lever arm is lifted.

9. Lifting apparatus according to any preceding claim, wherein the spaced clamping elements:
i) comprise respective elongate limbs extending away from the support mounting means; and/or,
ii) are pivotally mounted to the support mounting means at respective fixed pivot connections; and/or,
iii) are constrained to move together in unison toward one another (to the clamping position) or away from one another (to the release position); and/or,
iv) are arranged to pivot in a swing plane which is transverse to the longitudinal axis (and/or the pivotal plane) of the lever arm; and/or,
v) are provided with respective grip enhancing means (such as grip pads or the like); and/or,
vi) are de-mountable from the support mounting means, to be replaced with alternative clamping elements.

10. Lifting arrangement comprising a pair of lifting apparatus according to any preceding claim in combination, each connected (preferably releasably) at a spaced portion of a rigid elongate inter-connector (which is preferably selectively adjustable in length), such that the respective lever arms extend away from one another.
